Europäisches Patentamt

European Patent Office

Office européen des brevets

(19)

(11) Veröffentlichungsnummer: **0 151 310**
**B1**

## (12) EUROPÄISCHE PATENTSCHRIFT

(45) Veröffentlichungstag der Patentschrift:
**11.05.88**

(21) Anmeldenummer: **84116191.2**

(22) Anmeldetag: **22.12.84**

(51) Int. Cl.⁴: **A 47 J 43/06**

(54) **Vielzweckküchenmaschine mit Arbeitsbehälter.**

(30) Priorität: **07.02.84 DE 3404249**

(43) Veröffentlichungstag der Anmeldung:
**14.08.85 Patentblatt 85/33**

(45) Bekanntmachung des Hinweises auf die Patenterteilung:
**11.05.88 Patentblatt 88/19**

(84) Benannte Vertragsstaaten:
**DE FR GB IT NL SE**

(56) Entgegenhaltungen:
**BE - A - 473 558**
**DE - C - 513 144**
**FR - A - 913 712**
**US - A - 4 194 697**

(73) Patentinhaber: **Braun Aktiengesellschaft,**
**Rüsselsheimer Strasse 22, D-6000 Frankfurt/Main (DE)**

(72) Erfinder: **Schiebelhuth, Heinz, An der Nachtweide 17,**
**D-6000 Frankfurt/M. (DE)**
Erfinder: **Franke, Wolfgang, Walter-Rietigstrasse 41,**
**D-6070 Langen (DE)**
Erfinder: **Kahlcke, Hartwig, Friedrichstrasse 64,**
**D-6242 Kronberg (DE)**
Erfinder: **Oppermann, Günter, Kirchbornstrasse 37,**
**D-6057 Dietzenbach (DE)**

(74) Vertreter: **Einsele, Rolf, Braun Aktiengesellschaft**
**Postfach 1120 Frankfurter Strasse 145, D-6242 Kronberg**
**Taunus (DE)**

ACTORUM AG

## Beschreibung

Die Erfindung betrifft eine Vielzweckküchenmaschine mit einem das zu bearbeitende Nahrungsmittelgut aufnehmenden Arbeitsbehälter, in den ein Innentopf kleineren Volumens einsetzbar ist, und mit einer motorisch angetriebenen Antriebsachse, auf die zum Bearbeiten von flüssigen Nahrungsmitteln, insbesondere von kleinen Mengen Sahne, ein rotierendes, austauschbares Werkzeug aufsetzbar ist.

Eine derartige Vielzweckküchenmaschine ist aus der DE-C-513 144 bekannt. Bei dieser Vielzweckküchenmaschine können zur Aufnahme verschiedener Nahrungsmittel auswechselbare, die Nahrungsmittel aufnehmende Innentöpfe im Behälter eingesetzt werden. So dient beispielsweise nach Abbildung 5 der Innentopf zur Aufnahme von flüssigen Nahrungsmitteln, wie beispielsweise Sahne, die von einem in den Innentopf hineinragenden Schlagbesen zu Schlagsahne verarbeitet werden kann. Aufgrund des verhältnismässig grossvolumigen Innentopfs gegenüber dem Schlagbesen ist ein Schlagen von Sahne bei geringen Einfüllmengen nicht möglich.

Aus der US-A-4 194 697 ist eine weitere Vielzweckküchenmaschine bekannt, bei der in den Behälter ein Innentopf zur Aufnahme von mittels einer Raspelscheibe geschnittenen Nahrungsmitteln einsetzbar ist. Hierbei stellt die Raspelscheibe das Arbeitswerkzeug dar. Der Innentopf dient dazu, auch grössere Mengen von festen und bereits zerkleinerten Nahrungsmitteln aufzunehmen, als dies der Aussenbehälter mit seinem kurzen, von der Antriebsachse durchdringenden Halsabschnitt vermag. Eine Bearbeitung von flüssigen Nahrungsmitteln in dem Innentopf ist aber bei dieser Vielzweckküchenmaschine nicht vorgesehen.

Es stellte sich daher die Aufgabe, eine Vielzweckküchenmaschine zu schaffen, die unter Beibehaltung des vorteilhaften universellen Grundkonzeptes derartiger Geräte auch ein schnelles und gründliches Durchmischen bzw. Schlagen von geringen Flüssigkeitsmengen ermöglicht und die bezüglich der Anpassung des Behälterinnenraumes an den Arbeitsraum spezieller Bearbeitungswerkzeuge vermeidet bzw. überwindet.

Diese Aufgabe wird erfindungsgemäss dadurch gelöst, dass die Abmessungen des Innenraums des Innentopfs senkrecht zur Antriebsachse annähernd dem Arbeitsraum des dazu passenden Arbeitswerkzeugs entsprechen, wobei der Arbeitsraum der Raum ist, der bei der rotierenden Bewegung des in den Innenraum des Innentopfes (2) hineinragenden Arbeitswerkzeugs überstrichen wird.

Der nach der Erfindung vorgeschlagene in den Arbeitsbehälter einsetzbare Innentopf bietet folgende wesentliche Vorteile:

– In diesem Innentopf arbeiten die betreffenden Arbeitswerkzeuge mit besonders gutem Wirkungsgrad, und zwar auch bei extrem geringen Füllmengen. Unter dem Begriff Arbeitsraum ist hier der Raum zu verstehen, den die wirksamen Teile des rotierenden Arbeitswerkzeuges im Verlauf ihrer normalen Arbeitsbewegung durchlaufen. Unter dem Arbeitswerkzeug ist nur der Abschnitt des Werkzeugs zu verstehen, der die Flüssigkeit bearbeitet.

– Der erfindungsgemässe Innentopf ist ein verhältnismässig einfaches Formteil, das bezüglich seines Material- und Fertigungsaufwandes erheblich kostengünstiger sein kann als der eigentliche Arbeitsbehälter.

– Der erfindungsgemässe Innentopf benötigt zu seiner Aufbewahrung keinerlei zusätzlichen Stauraum, da er nach Gebrauch in den Arbeitsbehälter eingesetzt und mit der kompletten Küchenmaschine weggeräumt werden kann.

– Er ermöglicht die getrennte Bearbeitung einer zusätzlichen Rezeptcharge, die nach ihrer Zubereitung zusammen mit dem Innentopf aus dem Arbeitsbehälter herausgehoben und so lange beiseitegestellt werden kann, bis im Arbeitsbehälter die andere Rezeptcharge fertiggestellt ist.

Besonders vorteilhafte Ausführungsformen und Weiterbildungen des Erfindungsgedankens sind in den anschliessenden Unteransprüchen angegeben: Die erforderliche Fixierung des Innentopfes im Arbeitsbehälter erfolgt mit Hilfe von vorzugsweise etwa keilförmigen Vorsprüngen, die der Innentopf an der Aussenseite des oberen Randbereiches seiner Aussenwand aufweist und die ihn form- und/oder kraftschlüssig im Arbeitsbehälter arretieren. Besonders vorteilhaft ist es, den Innentopf in der Form einer nach oben offenen Kreisrinne auszubilden, da diese Gestalt sehr häufig dem sogenannten Arbeitsraum mindestens eines der austauschbaren Werkzeuge entspricht. Ein derart gestalteter Innentopf kann vorteilhafterweise auch mit einem Arbeitsbehälter kombiniert werden, der ebenfalls die Form einer nach oben offenen Kreisrinne hat, und zwar insbesondere auch dann, wenn der Arbeitsbehälter in an sich bekannter Weise einen zentrisch angeordneten, nach oben offenen senkrechten Dom zum Durchtritt einer das auswechselbare Werkzeug aufnehmenden und antreibenden Welle aufweist. In dieser Ausführungsform der Erfindung, bei der die Oberkante des besagten Domes im allgemeinen unterhalb der Oberkante der Aussenwand des Arbeitsbehälters liegt, ist es zweckmässig, den Innentopf dadurch an den Arbeitsbehälter anzupassen, dass sowohl seine Aussenwand als auch seine Innenwand den besagten Dom maximal bis zur Höhe der Aussenwand des Arbeitsbehälters überragen, wobei die Höhe der Innenwand des Innentopfes maximal diejenige seiner Aussenwand erreicht und vorzugsweise mit dieser übereinstimmt; denn hierdurch ist sowohl die Einpassung des Innentopfes in den Arbeitsbehälter als auch die Möglichkeit zur Aufnahme grösserer Füllmengen im Innentopf optimal gewährleistet.

In Weiterführung des Erfindungsgedankens kann die Vielzweckküchenmaschine zusätzlich mit mindestens einem weiteren Innentopf ausgestattet sein, der seinerseits durch entsprechende konstruktive Gestaltung – insbesondere massstäbliche Verkleinerung – in den ersten Innentopf einsetzbar ist. In einer bevorzugten Ausführungsform der Erfindung ist vorgesehen, die Innenwand des Innentopfes beziehungsweise der Innentöpfe bezüglich ihres Durchmessers, ihrer Höhe, Querschnittsform und/oder sonstigen Gestalt so mit dem Kupplungsteil der Werkzeuge abzustimmen, dass in jeden Innentopf nur das (die) zu ihm (ihnen) passende(n) Werkzeug(e) einsetzbar ist (sind).

Eine weitere zweckmässige Ausgestaltung der Erfindung besteht darin, die Vielzweckküchenmaschine mit einem Deckel auszustatten, mit dem sowohl der Arbeitsbehälter als auch der Innentopf verschliessbar ist. Vorzugsweise besitzt dieser Deckel in seinem Zentrum einen in den Arbeitsbehälter und/oder Innentopf hineinragenden etwa kegelförmigen Vorsprung, dessen Durchmesser in Gebrauchslage des Deckels in der Höhe der oberen Öffnung des Innendomes des Arbeitsbehälters gleich dem Innendurchmesser dieser Öffnung ist. Dieser kegelförmige Vorsprung bildet die Voraussetzung dafür, dass der erfindungsgemässe Deckel jedenfalls auch die obere Öffnung des in den Arbeitsbehälter hineinragenden Domes verschliesst. Diese Massnahme kann vorteilhaft dadurch abgerundet werden, dass bei in den Arbeitsbehälter eingesetztem Innentopf und auf diesen beiden Behältern in Gebrauchslage gebrachtem Deckel der Durchmesser des kegelförmigen Vorsprungs in Höhe der oberen Öffnung der rohr- oder flaschenhalsförmigen Innenwand des Innentopfes dem Innendurchmesser auch dieser Öffnung gleicht.

Mehrere Ausführungsbeispiele sind in der Zeichnung im Schnitt dargestellt und werden, wie folgt, näher erläutert. Es zeigen:

Fig. 1a einen Arbeitsbehälter, bei dem das Werkzeug von oben angetrieben wird;

Fig. 1b einen Innentopf nach der Erfindung für den Arbeitsbehälter nach Fig. 1a;

Fig. 1c einen in einen Arbeitsbehälter (nach Fig. 1a) eingesetzten Innentopf (nach Fig. 1b), in den ein von oben antreibbarer Schlagbesen hineinragt;

Fig. 2a einen von einem Deckel verschlossenen Arbeitsbehälter, bei dem der Antrieb für ein Werkzeug vom Boden her erfolgt;

Fig. 2b einen von einem Deckel verschlossenen Innentopf, bei dem der Antrieb vom Boden her erfolgt;

Fig. 2c einen in den Arbeitsbehälter (nach Fig. 2a) eingesetzten Innentopf (nach Fig. 2b) und

Fig. 2d einen Arbeitsbehälter mit Innentopf gemäss Fig. 2c, jedoch ohne Deckel, aber mit eingesetztem Sahneschlagbesen.

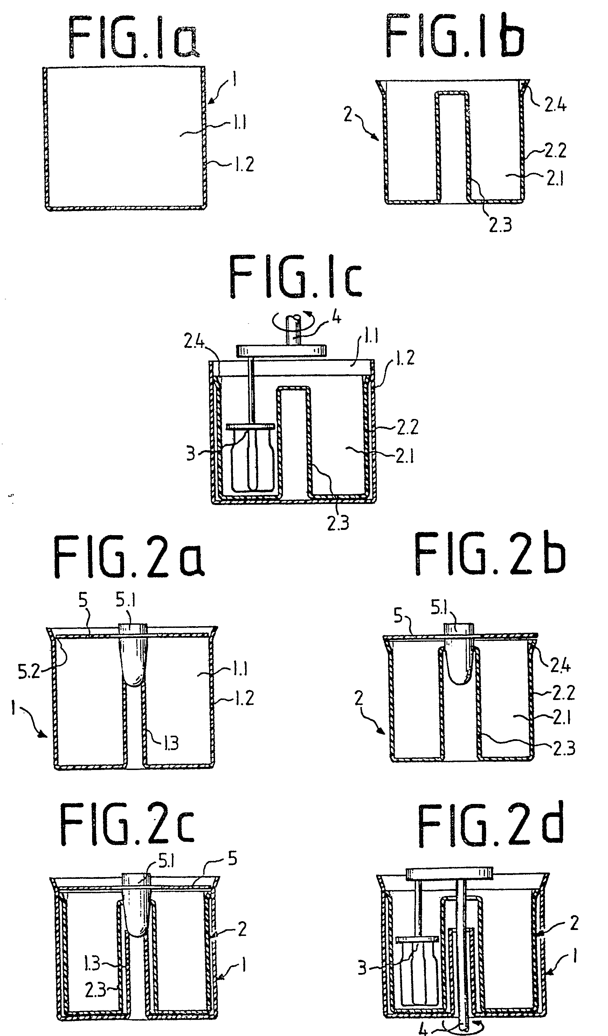

Figur 1a zeigt einen Arbeitsbehälter 1 in Form einer üblichen nach oben offenen Rührschüssel, in deren Innenraum 1,1 ein von oben angetriebenes Werkzeug eingesetzt werden kann. Figur 1b gibt einen erfindungsgemässen Innentopf 2 wieder, dessen Innenraum 2,1 in dem dargestellten Beispiel als nach oben offene Kreisrinne dargestellt ist und an der Aussenseite des oberen Randbereiches seiner Aussenwand 2,2 keilförmige Vorsprünge 2,4 aufweist. Wenn man diesen Innentopf in den Arbeitsbehälter gemäss Figur 1a einsetzt, wird er mittels der Vorsprünge 2,4, die sich geringfügig radial über den Innendurchmesser der Aussenwand 1,2 des Arbeitsbehälters 1 hinaus erstrecken, kraftschlüssig gegenüber dieser Aussenwand 1,2 fixiert. Durch diese Fixierung wird verhindert, dass das in Figur 1c eingezeichnete, über die Antriebsachse 4 durch den nicht dargestellten Elektromotor in Rotation versetzte Werkzeug 3 seine Drehbewegung über das bearbeitete Nahrungsmittelgut auf den Innentopf 2 überträgt und diesen mitnimmt. Der die Drehbewegung der Antriebsachse 4 auf das Werkzeug 3 übertragende Antriebsarm kann übrigens an sich bekannte Übertragungselemente enthalten, die das Werkzeug 3 um seine senkrechte Achse in eine Rotation versetzen, die sich der Drehbewegung der Achse 4 überlagert, und zwar mit gegenüber dieser erheblich höherer Drehzahl.

Die Figuren 2a bis 2d zeigen, wie das erfindungsgemässe Konzept bei einer Vielzweckküchenmaschine realisiert werden kann, deren vom Elektromotor beaufschlagte Antriebsachse von unten her durch den Arbeitsbehälter hindurch nach oben geführt ist (entsprechende Teile sind mit denselben Bezugsziffern versehen, wie in den Figuren 1a bis 1c):

Der Arbeitsbehälter 1 besitzt in diesem Fall zum Durchtritt der Antriebswelle einen senkrechten Dom 1,3, dessen Höhe in dem dargestellten Beispiel deutlich geringer ist als die Höhe der Aussenwand 1,2. Figur 2b zeigt einen hierzu passenden Innentopf 2 gemäss der vorliegenden Erfindung mit entsprechendem kreisrinnenförmigen Innenraum 2,1, rohrförmiger Innenwand 2,3 und einer Aussenwand 2,2, deren oberer Rand die Arretierungsvorsprünge 2,4 trägt. In Figur 2d ist ebenso wie in Figur 1c deutlich erkennbar, dass der Innenraum 2,1 des dargestellten Innentopfes 2 dem Arbeitsraum des Werkzeuges 3 gemäss der oben gegebenen Definition entspricht, so dass das Werkzeug 3 den gesamten Innenraum 2,1 durchläuft, ohne dass tote Winkel verbleiben, in denen das Nahrungsmittelgut ungenügend bearbeitet wird.

Die Figuren 2a bis 2c machen ausserdem die Merkmale und die Funktion des im Rahmen der vorliegenden Erfindung vorgeschlagenen Behälterdeckels 5 in seinen verschiedenen Gebrauchslagen deutlich. Wie aus Figur 2a ersichtlich, ist der Aussenrand 5,2 des Deckels genau an den Innendurchmesser des Arbeitsbehälters 1 angepasst, und der kegelförmige Vorsprung 5,1 hat in Höhe der oberen Öffnung des Domes 1,3 einen Durchmesser, der dem Innendurchmesser dieser Öffnung genau entspricht, so dass er auch diese Öffnung des Arbeitsbehälters gegenüber der Aussenluft verschliesst. In Figur 2b deckt der Deckel 5 einen erfindungsgemässen Innentopf 2 ab, dessen Innenwand 2,3 und Aussenwand 2,2 gleich hoch sind, indem er auf ihren beiden Oberkanten bündig aufliegt. Es ist jedoch ohne weiteres möglich, mit einem entsprechenden Deckel auch einen erfindungsgemässen Innentopf vollständig zu verschliessen, dessen rohrförmige Innenwand 2,3 eine geringere Höhe hat als die Aussenwand 2,2, indem man dafür Sorge trägt, dass der kegelförmige Vorsprung 5,1 so ausgebildet ist, dass er in Höhe der oberen Öffnung der rohrförmigen Innenwand 2,3 denselben Durchmesser wie diese Öffnung besitzt.

## Patentansprüche

1. Vielzweckküchenmaschine mit einem das zu bearbeitende Nahrungsmittelgut aufnehmenden Arbeitsbehälter (1), in den ein Innentopf (2) kleineren Volumens einsetzbar ist, und mit einer motorisch angetriebenen Antriebsachse (4), auf die zum Bearbeiten von flüssigen Nahrungsmitteln, insbesondere von kleinen Mengen Sahne, ein rotierendes, austauschbares Arbeitswerkzeug (3) aufsetzbar ist, dadurch gekennzeichnet, dass die Abmessungen des Innenraums des Innentopfs (2) senkrecht zur Antriebsachse (4) annähernd dem Arbeitsraum des dazu passenden Arbeitswerkzeugs (3) entsprechen, wobei der Arbeitsraum der Raum ist, der bei der rotierenden Bewegung des in den Innenraum des Innentopfes (2) hineinragenden Arbeitswerkzeugs (3) überstrichen wird.

2. Vielzweckküchenmaschine nach Anspruch 1, dadurch gekennzeichnet, dass der Innentopf (2) an der Aussenseite des oberen Randbereiches seiner Aussenwand (2,2) mindestens einen insbesondere etwa keilförmigen Vorsprung (2,4) aufweist, der den in den Arbeitsbehälter (1) eingesetzten Innentopf (2) form- und/oder kraftschlüssig an der Innenseite der Aussenwand (1,2) des Arbeitsbehälters (1) gegen Verdrehung fixiert.

3. Vielzweckküchenmaschine nach einem der Ansprüche 1 und 2, dadurch gekennzeichnet, dass der Innentopf (2) die Form einer nach oben offenen Kreisrinne hat.

4. Vielzweckküchenmaschine nach Anspruch 3, dadurch gekennzeichnet, dass auch der Arbeitsbehälter (1) die Form einer nach oben offenen Kreisrinne hat.

5. Vielzweckküchenmaschine nach Anspruch 4, dadurch gekennzeichnet, dass der Arbeitsbehälter (1) in an sich bekannter Weise einen zentrisch angeordneten, nach oben offenen senkrechten Dom (1,3) zum Durchtritt einer das auswechselbare Werkzeug (3) aufnehmenden und antreibenden Welle (4) aufweist und dass der Innentopf (2) die Form einer nach oben offenen Kreisrinne mit rohr- oder flaschenhalsförmiger Innenwand (2,3) hat.

6. Vielzweckküchenmaschine nach Anspruch 5, dadurch gekennzeichnet, dass die Oberkante des Domes (1,3) unterhalb der Oberkante der Aussenwand (1,2) des Arbeitsbehälters (1) liegt, und dass die Aussenwand (2,2) und die Innenwand (2,3) des Innentopfes (2) den Dom (1,3) maximal bis zur Höhe der Aussenwand (1,2) des Arbeitsbehälters (1) überragen, wobei die Innenwand (2,3) maximal die Höhe der Aussenwand (2,2) aufweist.

7. Vielzweckküchenmaschine nach einem der Ansprüche 3 bis 6, dadurch gekennzeichnet, dass die Aussenwand (2,2) und die Innenwand (2,3) des Innentopfes (2) gleich hoch sind.

8. Vielzweckküchenmaschine nach einem der Ansprüche 1 bis 7, gekennzeichnet durch mindestens einen entsprechenden, insbesondere massstäblich verkleinerten, in den Innentopf (2) einsetzbaren weiteren Innentopf.

9. Vielzweckküchenmaschine nach einem der Ansprüche 5 bis 8, dadurch gekennzeichnet, dass die Innenwand des Innentopfes (2) bzw. der Innentöpfe bezüglich ihres Durchmessers, ihrer Höhe, Querschnittsform und/oder sonstigen Gestalt so mit der Form des Ansatzteils der Werkzeuge korrespondieren, dass in jeden Innentopf nur das (die) zu ihm (ihnen) passende(n) Werkzeug(e) einsetzbar ist (sind).

10. Vielzweckküchenmaschine nach einem der Ansprüche 1 bis 9, gekennzeichnet durch einen Deckel, mit dem sowohl der Arbeitsbehälter (1) als auch der Innentopf (2) als auch der in den Arbeitsbehälter (1) eingesetzte Innentopf (2) verschliessbar ist.

11. Vielzweckküchenmaschine nach Anspruch 10, dadurch gekennzeichnet, dass der Deckel (5) in seiner jeweiligen Gebrauchslage mit der Aussenseite seines Randes (5,2) an der Innenfläche der Aussenwand (1,2) des Arbeitsbehälters (1) ringsum anliegt und/oder mit der Unterseite seines Randes (5,2) auf dem oberen Rand der Aussenwand (2,2) des Innentopfes ringsum aufliegt.

12. Vielzweckküchenmaschine nach einem der Ansprüche 3 bis 11, dadurch gekennzeichnet, dass der Deckel (5) in seinem Zentrum einen in die Behälter (1 und 2) hineinragenden kegelförmigen Vorsprung (5,1) aufweist, dessen Durchmesser in Gebrauchslage des Deckels (5) in der Höhe der oberen Öffnung des Domes (1,3) gleich dem Innendurchmesser dieser Öffnung ist.

13. Vielzweckküchenmaschine nach Anspruch 12, dadurch gekennzeichnet, dass in der Gebrauchslage des Deckels (5) der Durchmesser des kegelförmigen Vorsprungs (5,1) in Höhe der oberen Öffnung der rohr- oder flaschenhalsförmigen Innenwand (2,3) des Innentopfes (2) gleich dem Innendurchmesser dieser Öffnung ist.

## Revendications

1. Appareil de cuisine à usages multiples comportant: un récipient de travail (1) qui reçoit les produits alimentaires à travailler et dans lequel on peut insérer un pot intérieur (2) ayant un plus petit volume; et un axe d'entraînement (4) entraîné par moteur, axe (4) sur lequel on peut monter un outil de travail tournant, amovible, pour travailler des produits alimentaires liquides, notamment des petites quantités de crème, caractérisé par le fait que les dimensions de l'espace intérieur du pot intérieur (2), considérées perpendiculairement à l'axe d'entraînement (4), correspondent approximativement à l'espace de travail de l'outil de travail (3) s'y adaptant, l'espace de travail étant l'espace balayé lors du mouvement de rotation de l'outil de travail (3) pénétrant dans l'espace intérieur du pot intérieur (2).

2. Appareil de cuisine à usages multiples selon revendication 1, caractérisé par le fait que le pot intérieur (2) présente, du côté extérieur de la région supérieure du bord de sa paroi extérieure (2,2), au moins un relief (2,4) en forme de coin, lequel arrête en rotation le pot intérieur (2) inséré dans le récipient de travail (1) et/ou l'arrête en rotation par effet de serrage contre le côté intérieur de la paroi extérieure (1,2) du récipient de travail.

3. Appareil de cuisine à usages multiples selon l'une des revendications 1 et 2, caractérisé par le fait que le pot intérieur (2) possède la forme d'une rigole circulaire ouverte vers le haut.

4. Appareil de cuisine à usages multiples selon revendication 3, caractérisé par le fait que le récipient de travail (1) possède lui aussi la forme d'une rigole circulaire ouverte vers le haut.

5. Appareil de cuisine à usages multiples selon revendication 4, caractérisé par le fait que le récipient de travail (1) présente, de manière connue en soi, un dôme vertical (1,3) ouvert vers le haut, agencé centralement, pour le passage d'un arbre (4) qui reçoit et entraîne l'outil amovible (3), et par le fait que le pot intérieur (2) possède la forme d'une rigole circulaire ouverte vers le haut avec paroi intérieure (2,3) en forme de tube ou de goulot de bouteille.

6. Appareil de cuisine à usages multiples selon revendication 5, caractérisé par le fait que le bord supérieur du dôme se trouve en dessous du bord supérieur de la paroi extérieure (1,2) du récipient de travail (1), et par le fait que la paroi extérieure (2,2) et la paroi intérieure (2,3) du pot intérieur (2) dépassent en hauteur le dôme (1,3), au maximum jusqu'à la hauteur de la paroi extérieure (1,2) du récipient de travail (1), la paroi intérieure (2,3) présentant au maximum la hauteur de la paroi extérieure (2,2).

7. Appareil de cuisine à usages multiples selon l'une des revendications 3 à 6, caractérisé par le fait que la paroi extérieure (2,2) et la paroi intérieure (2,3) du pot intérieur ont la même hauteur.

8. Appareil de cuisine à usages multiples selon l'une des revendications 1 à 7, caractérisé par au moins un autre pot intérieur correspondant, notamment réalisé à une échelle plus petite, qui peut être inséré dans le pot intérieur (2).

9. Appareil de cuisine à usages multiples selon l'une des revendications 5 à 8, caractérisé par le fait que, pour ce qui est de son diamètre, de sa hauteur, de la forme de sa section droite et/ou de sa configuration, la paroi intérieure du pot intérieur (2) ou des pots intérieurs correspond à la forme de la paroi saillante des outils, de manière que l'on ne puisse insérer dans chaque pot intérieur que le ou les outils s'y adaptant.

10. Appareil de cuisine à usages multiples selon l'une des revendications 1 à 9, caractérisé par un couvercle pouvant fermer aussi bien le récipient de travail (1) que le pot intérieur (2) et le pot intérieur (2) inséré dans le récipient de travail (1).

11. Appareil de cuisine à usages multiples selon revendication 10, caractérisé par le fait que, lorsqu'il est à sa position d'utilisation, le couvercle (5) s'applique périmétriquement, par le côté extérieur de son bord (5,2), contre la surface intérieure de la paroi extérieure (1,2) du récipient de travail (1) et/ou s'appuie périmétriquement, par le côté dessous de son bord (5,2), sur la paroi extérieure (2,2) du pot intérieur.

12. Appareil de cuisine à usages multiples selon l'une des revendications 3 à 11, caractérisé par le fait que le couvercle (5) présente en son centre un saillant conique (5,1) qui pénètre dans les récipients (1 et 2), et dont le diamètre est égal au diamètre intérieur de l'ouverture supérieure du dôme (1,3) lorsque le couvercle (5) est en position d'utilisation au niveau de cette ouverture.

13. Appareil de cuisine à usages multiples selon revendication 12, caractérisé par le fait que, lorsque le couvercle (5) est en position d'utilisation, le diamètre du saillant conique (5,1) au niveau de l'ouverture supérieure de la paroi intérieure (2,3) du pot intérieur (2), cette paroi étant tubulaire ou en forme de goulot de bouteille, est égal au diamètre intérieur de cette ouverture.

**Claims**

1. A multipurpose food processor with a mixing bowl (1) which receives the food material to be processed and into which an inner bowl (2) of smaller volume is insertable, and with a motor-driven shaft (4) on which an interchangeable rotary tool (3) is engageable for the purpose of processing liquid foods, in particular small quantities of cream, characterized in that the dimensions of the inner space of the inner bowl (2) vertically to the drive shaft (4) correspond approximately to the working space of the matching processing tool (3), with the working space being the space swept as the processing tool (3) extending into the inner space of the inner bowl (2) rotates.

2. A multipurpose food processor as claimed in claim 1, characterized in that the inner bowl (2) has on the outside of the upper rim area of its outer wall (2.2) at least one, in particular approximately wedge-shaped, projection (2.4) locking the inner bowl (2) contained within the mixing bowl (1) in position by positive and/or frictional engagement with the inside of the outer wall (1.2) of the mixing bowl (1).

3. A multipurpose food processor as claimed in any one of the claims 1 and 2, characterized in that the inner bowl (2) is shaped in the form of an upwardly open circular trough.

4. A multipurpose food processor as claimed in claim 3, characterized in that also the mixing bowl (1) is shaped in the form of an upwardly open circular trough.

5. A multipurpose food processor as claimed in claim 4, characterized in that the mixing bowl (1) is equipped in a manner known per se with a centrically arranged, upwardly open vertical dome (1.3) for extension therethrough of a shaft (4) seating and driving the interchangeable tool (3), and that the inner bowl (2) has the shape of an upwardly open circular trough with a tubular or bottleneck-shaped inner wall (2.3).

6. A multipurpose food processor as claimed in claim 5, characterized in that the upper edge of the dome (1.3) lies below the upper edge of the outer wall (1.2) of the mixing bowl (1), and that the outer wall (2.2) and the inner wall (2.3) of the inner bowl (2) extend over the dome (1.3) up to a maximum elevation corresponding to the height of the outer wall (1.2) of the mixing bowl (1), with the height of the inner wall (2.3) not exceeding the height of the outer wall (2.2).

7. A multipurpose food processor as claimed in any one of the claims 3 to 6, characterized in that the outer wall (2.2) and the inner wall (2.3) of the inner bowl (2) are of the same height.

8. A multipurpose food processor as claimed in any one of the claims 1 to 7, characterized by at least a further appropriate, in particular scaled down, inner bowl which is insertable into the inner bowl (2).

9. A multipurpose food processor as claimed in any one of the claims 5 to 8, characterized in that the inner wall of the inner bowl (2) or the inner bowls corresponds with the form of the coupling means of the tools in respect of diameter, height cross-sectional form and/or other structure such that only the proper tool(s) fit(s) into its (their) proper inner bowl(s).

10. A multipurpose food processor as claimed in any one of the claims 1 to 9, characterized by a lid (5) which is adapted to close both the mixing bowl (1) and the inner bowl (2) as well as the inner bowl (2) contained within the mixing bowl (1).

11. A multipurpose food processor as claimed in claim 10, characterized in that in its respective position of use, the lid (5) has its full peripheral rim (5.2) in abutment with the inner surface of the outer wall (1.2) of the mixing bowl (1) and/or rests with the underside of its peripheral rim (5.2) all around on the upper edge of the outer wall (2.2) of the inner bowl.

12. A multipurpose food processor as claimed in any one of the claims 3 to 11, characterized in that the lid (5) has in its center a conical projection (5.1) which extends into the bowls (1 and 2) and whose diameter at the elevation of the upper opening of the dome (1.3) equals the inside diameter of said opening with the lid (5) in its position of use.

13. A multipurpose food processor as claimed in claim 12, characterized in that in the position of use of the lid (5), the diameter of the conical projection (5.1) at the elevation of the upper opening of the tubular or bottleneck-shaped inner wall (2.3) of the inner bowl (2) is equal to the inside diameter of said opening.

# FIG.1a

1
1.1
1.2

# FIG.1b

2
2.4
2.2
2.1
2.3

# FIG.1c

4
2.4
1.1
1.2
2.2
2.1
3
2.3

# FIG.2a

5
5.1
5.2
1.1
1.2
1
1.3

# FIG.2b

5
5.1
2.4
2.2
2.1
2.3
2

# FIG.2c

5.1
5
2
1.3
2.3
1

# FIG.2d

2
1
3
4

7